# EUROPÄISCHE PATENTSCHRIFT

(11) **EP 0 927 111 B1**
(45) Veröffentlichungstag und Bekanntmachung des Hinweises auf die Patenterteilung: **12.12.2001**
(21) Anmeldenummer: 97943780.3
(22) Anmeldetag: 16.09.1997
(51) Int. Cl.: B60Q 1/14

(54) **KRAFTFAHRZEUG-LICHTSCHALTER**
MOTOR VEHICLE LIGHT SWITCH
COMMUTATEUR DE PHARES POUR AUTOMOBILE

(30) Priorität: 21.09.1996 DE 19638773
(43) Veröffentlichungstag der Anmeldung: 07.07.1999
(73) Patentinhaber: EATON CONTROLS GmbH & Co. KG, 55445 Langenlonsheim (DE)
(72) Erfinder: DILLY, Günter, D-55424 Münster-Sarmsheim (DE); RUDOLPH, Gerd, D-55459 Aspisheim (DE)
(74) Vertreter: Becker, Bernd, Dipl.-Ing.
(86) Internationale Anmeldenummer: DE9702095
(87) Internationale Veröffentlichungsnummer: WO9812069

(56) Entgegenhaltungen:
- DE-A- 4 319 543
- FR-A- 1 601 399
- US-A- 4 855 540

## Beschreibung

Die Erfindung bezieht sich auf einen Kraftfahrzeug-Lichtschalter mit einem Gehäuse, in dem ein Schalter für Standlicht sowie Fahrtlicht, ein Schalter für Nebellicht und/oder ein Schalter für Nebelschlußlicht angeordnet sind.

Derartige Schalter zum Betätigen der Stand- sowie Fahrtlichtlampen durch Drehen des Betätigungsknopfes und gegebenenfalls zum Betätigen der Lampen der Innenbeleuchtung durch Ziehen des Betätigungsknopfes sind in den verschiedensten Ausführungen bekannt. Ein solcher Schalter wird als vormontierte Baueinheit in das Armaturenbrett eines Kraftfahrzeuges eingesetzt. Zusätzlich zu diesem Dreh-Zug-Schalter müssen in dem Armaturenbrett an unterschiedlichen Stellen ein Ein-/Aus-Schalter für das Nebellicht, ein Ein-/Aus-Schalter für das Nebelschlußlicht, eine Regulierschalter für die Leuchtweite und ein Regulierschalter für die Armaturenbrettbeleuchtung montiert werden. Diese Anordnung der Schalter erfordert zum einen einen gesonderten Einbauraum für jeden einzelnen Schalter und bedingt zum anderen für jeden einzelnen Schalter einen besonderen Montageaufwand. Darüber hinaus liegen die Schalter aufgrund ihrer beabstandeten Positionierung innerhalb des Armaturenbrettes nicht alle gleichzeitig in der Blickrichtung des Kraftfahrzeug-Führers, was das Auffinden eines bestimmten Schalters erschwert.

Aus der gattungsgemässen DE 43 19 543 A1 ist ein Kraftfahrzeug-Lichtschalter mit einem in einem Gehäuse untergebrachten Dreh-Zug-Schalter für das Stand- sowie Fahrtlicht und die Innenbeleuchtung bekannt. Das Gehäuse nimmt zusätzlich unter anderem einen Ein/Aus-Schalter für das Nebellicht, einen Ein-/Aus-Schalter für das Nebelschlußlicht und einen Regulierschalter für die Armaturenbrettbeleuchtung auf. Dadurch ergibt sich ein kombinierter Kraftfahrzeug-Lichtschalter für viele Lichtschaltfunktionen eines Kraftfahrzeuges, der als vormontierte Baueinheit leicht und schnell in eine zugehörige Öffnung des Armaturenbrettes des Kraftfahrzeuges einsetzbar ist, d.h. es müssen nicht mehr verschiedene Einzelschalter für die unterschiedlichen Lichtschaltfunktionen montiert werden, sondern es ist lediglich nur noch die Montage des kombinierten Kraftfahrzeug-Lichtschalters erforderlich. Da sämtliche Schalter in einem gemeinsamen Gehäuse untergebracht sind, bilden sie eine äußerst kompakte Anordnung, die nur relativ wenig Einbauraum benötigt. Weiterhin liegen sämtliche Einzelschalter unmittelbar in einer Blickrichtung des Kraftfahrzeug-Führers, wodurch dieser rasch den gewünschten Einzelschalter des kombinierten Kraftfahrzeug-Lichtschalters erkennen kann. Dabei sind alle Lichtschaltfunktionen separat für sich durchführbar, wobei also die Schalter für Nebellicht und Nebelschlußlicht unabhängig vom Schalter für Standlicht sowie Fahrtlicht geschaltet werden können. Dabei kommt es häufig vor, daß zwar das Standlicht bzw. Fahrtlicht ausgeschaltet wird und das Nebellicht und Nebelschlußlicht jedoch versehentlich oder unbeachtet weiter eingeschaltet bleiben, was in der Regel unzulässig ist.

Der Erfindunq liegt daher die Aufgabe zugrunde, einen Kraftfahrzeug-Lichtschalter der eingangs genannten Art zu schaffen, bei dem beim Ausschalten des Fahrtlichtes gleichzeitig automatisch das Nebellicht bzw. Nebelschlußlicht ausgeschaltet wird, wobei der Kraftfahrzeug-Lichtschalter möglichst kompakt gebaut ist.

Erfindungsgemäß wird die Aufgabe dadurch gelöst, daß beim Ausschalten des Fahrtlichtes das Nebellicht und/oder das Nebelschlußlicht zwangsweise mechanisch ausgeschaltet wird.

Hierdurch kann eine Reihe von Maßnahmen realisiert werden. So ist gewährleistet, daß in der Stellung "AUS" des Schalters für Standlicht und Fahrtlicht die Schalter für Nebellicht und Nebelschlußlicht nicht einschaltbar sind. Damit wird ein separates Einschalten der Schalter für Nebellicht und Nebelschlußlicht vermieden. Darüber hinaus können in der Stellung "STANDLICHT" des Schalters für Standlicht und Fahrtlicht die Schalter für Nebellicht und Nebelschlußlicht ebenfalls nicht einschaltbar sein. Hingegen wird ermöglicht, daß in der Stellung "FAHRTLICHT" des Schalters für Standlicht und Fahrtlicht die Schalter für Nebellicht und Nebelschlußlicht frei betätigbar sind. Weiterhin werden beim Ausschalten des Fahrtlichtes das Nebellicht und Nebelschlußlicht zwangsweise ausgeschaltet. Es wird also immer sichergestellt, daß das Nebellicht bzw. Nebelschlußlicht nur in Verbindung mit dem Fahrtlicht eingeschaltet werden kann. In den Schaltstellungen "AUS" und "STANDLICHT" ist ein Zuschalten des Nebellichtes bzw. Nebelschlußlichtes nicht möglich. Zweckmäßigerweise ist der Schalter für Standlicht und Fahrtlicht mit den Schaltern für Nebellicht und Nebelschlußlicht mechanisch verbunden.

Bevorzugt ist zur mechanischen Verbindung des Schalters für Standlicht und Fahrtlicht mit den Schaltern für Nebellicht und Nebelschlußlicht eine vom Schalter für Standlicht und Fahrtlicht betätigbare Schieberkulisse vorgesehen. Dadurch wird eine lineare Schiebebewegung der Schieberkulisse relativ zum Schalter für Standlicht und Fahrtlicht bzw. zu den Schaltern für Nebellicht und Nebelschlußlicht ermöglicht, und zwar dann, wenn der Schalter für Standlicht oder Fahrtlicht in eine dieser beiden Schaltstellungen gebracht wird.

Darüber hinaus ist der Schalter für Standlicht und Fahrtlicht in dessen "AUS"-Stellung außer Eingriff mit der Schieberkulisse bringbar, so daß die mechanische Verbindung zwischen dem Schalter für Standlicht und Fahrtlicht bzw. den Schaltern für Nebellicht und Nebelschlußlicht in nur dieser "AUS"-Stellung getrennt ist.

Zweckmäßigerweise ist der Schalter für Standlicht und Fahrtlicht als Drehschalter ausgebildet. Ein solcher Drehschalter läßt sich einfach handhaben und naturgemäß auf einfache Weise in die jeweilige Schaltstellung verstellen.

Um den Eingriff des Drehschalters mit der Schieberkulisse zu gewährleisten, weist der Drehschalter umfangsseitig ein Rastelement auf, welches unmittelbar in Eingriff mit der Schieberkulisse gelangt. Ebenso ist es zweckmäßig, die Schalter für Nebellicht und Nebelschlußlicht als Drucktastenschalter auszubilden. Auch derartige Drucktastenschalter lassen sich einfach bedienen.

Damit die Blockierung bzw. Entriegelung der Drucktastenschalter je nach Schaltstellung des Schalters für Standlicht und Fahrtlicht ermöglicht werden kann, ist jedem Drucktastenschalter ein Rastkurvenmechanismus zugeordnet, wobei der Rastkurvenmechanismus aus einer im Drucktastenschalter ausgebildeten Rastkurvenbahn und einem mit dieser zusammenwirkenden gehäuseseitigen und druckfederbelasteten Führungshebel besteht. Ferner umfaßt die Schieberkulisse wenigstens eine Schubstange, die einerseits eine Rastschaltung und andererseits zumindest ein Steuerelement für den Rastkurvenmechanismus aufweist. Vorteilhafterweise wird hierbei das Steuerelement für den Rastkurvenmechanismus durch eine Aussparung in der Schubstange gebildet.

Nach einer Ausbildungsform der Erfindung sind der Schalter für Nebellicht und der Schalter für Nebelschlußlicht gleichzeitig von der Schieberkulisse der Schubstange betätigbar. Hierbei ist die Schubstange der Schieberkulisse nur einteilig ausgebildet, da sowohl der Schalter für Nebellicht und der Schalter für Nebelschlußlicht gleichzeitig allein durch diese eine Schubstange arretiert oder freigegeben werden können.

Bei einer anderen Ausgestaltung der Erfindung sind der Schalter für Nebellicht und der Schalter für Nebelschlußlicht parallel zueinander angeordnet, und gleichzeitig ist jeder dieser Schalter von jeweils einer von parallel zueinander verlaufenden Schubstangen der Schieberkulisse betätigbar ist. Dadurch wird die Schieberkulisse in zwei Schubstangen geteilt, die jedoch an ihrem zum Schalter für Standlicht und Fahrtlicht benachbarten Ende hin miteinander verbunden sind, so daß die in zwei Schubstangen geteilte Schieberkulisse allein durch den Schalter für Standlicht und Fahrtlicht betätigbar ist.

Um die Funktionalität des Kraftfahrzeug-Lichtschalters weiter zu verbessern und mehrere Lichtschaltfunktionen zu realisieren, kann bevorzugt der Drehschalter für das Standlicht und das Fahrtlicht gleichzeitig für die Innenbeleuchtung des Kraftfahrzeuges vorgesehen werden. Dazu ist dieser bevorzugt als Dreh-Zug-Schalter ausgebildet.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im folgenden anhand zweier Ausführungsbeispiele unter Bezugnahme auf die zugehörigen Zeichnungen näher beschrieben. In den Zeichnungen zeigen
- Fig. 1: eine Draufsicht auf eine erste Ausführungsform eines Kraftfahrzeug-Lichtschalters,
- Fig. 2: eine Draufsicht auf eine weitere Ausführungsform eines Kraftfahrzeug-Lichtschalters,
- Fig. 3: einen Schnitt durch einen Kraftfahrzeug-Lichtschalter mit Darstellung der Rastsysteme,
- Fig. 4: eine Unteransicht auf die Darstellung nach Fig. 3 mit einem Teilschnitt in Richtung des Pfeiles IV,
- Fig. 7: einen Schnitt durch einen Kraftfahrzeug-Lichtschalter in der Standlichtstellung mit Darstellung der Rastsysteme,
- Fig. 8: eine Unteransicht auf die Darstellung nach Fig. 7 mit einem Teilschnitt in Richtung des Pfeiles VIII,
- Fig. 9: eine vergrößerte Darstellung der Einzelheit IX nach Fig. 8 in der Einschaltstellung eines Drucktastenschalters,
- Fig. 10: eine vergrößerte Darstellung der Einzelheit IX nach Fig. 8 in der Ausschaltbewegung durch den Drehschalter und
- Fig. 11: eine Schnittansicht auf die Darstellung nach Fig. 4 entlang der Linie XI-XI.

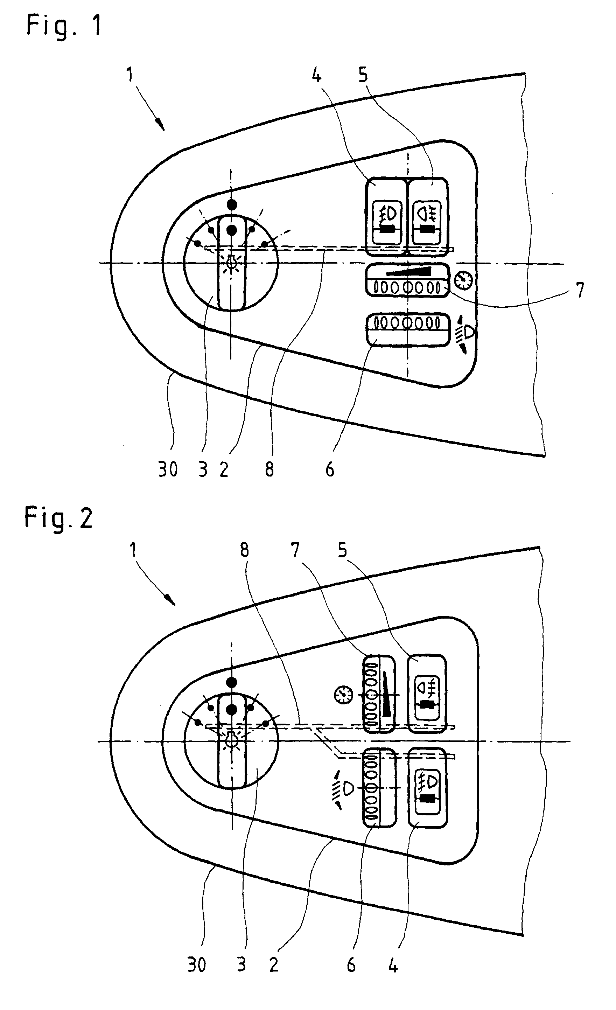

Ein Kraftfahrzeug-Lichtschalter 1 umfaßt ein Gehäuse 2, das in ein Armaturenbrett 30 des Kraftfahrzeuges eingesetzt ist, wobei die Außenform des Gehäuses 2 der Form des Armaturenbrettes 30 angepaßt ist. Im Gehäuse 2 ist je ein Schalter 3 für Standlicht, Fahrtlicht und Parklicht untergebracht. Dieser Schalter 3 ist in verschiedene Stellungen, nämlich "AUS", "STANDLICHT", "FAHRTLICHT", "PARKLICHT LINKS" und "PARKLICHT RECHTS" schaltbar, deren zugehörige Markierungen auf dem Gehäuse 2 und dem Schalter 3 angebracht sind. Darüber hinaus befindet sich in dem Gehäuse 2 ein Schalter 4 für Nebellicht und ein Schalter 5 für Nebelschlußlicht. Die Schalter 4 und 5 sind gemäß Fig. 1 in Reihe nebeneinander und in einer anderen Ausführungsform nach Fig. 2 parallel zueinander angeordnet. Des weiteren sind im Gehäuse 2 noch ein Schalter 6 für die Leuchtweitenregulierung und ein Schalter 7 für die Regulierung der Armaturenbrettbeleuchtung untergebracht. Hierbei ist den einzelnen Schaltern 3, 4, 5, 6 und 7 jeweils eine die Funktion erklärende Suchbeleuchtung und eine die geschaltete Funktion darstellende Funktionsbeleuchtung zugeordnet. Der Schalter 3 für Stand-, Fahrt- und Parklicht ist innerhalb des Gehäuses 2 über eine Schieberkulisse 8 mit dem Schalter 4 für Nebellicht und dem Schalter 5 für Nebelschlußlicht verbunden.

Gemäß Fig. 1 ist die Schieberkulisse 8 einarmig und gemäß Fig. 2 zweiarmig ausgebildet. In der weiteren Beschreibung wird auf die Ausführungsform nach Fig. 1 Bezug genommen wird.

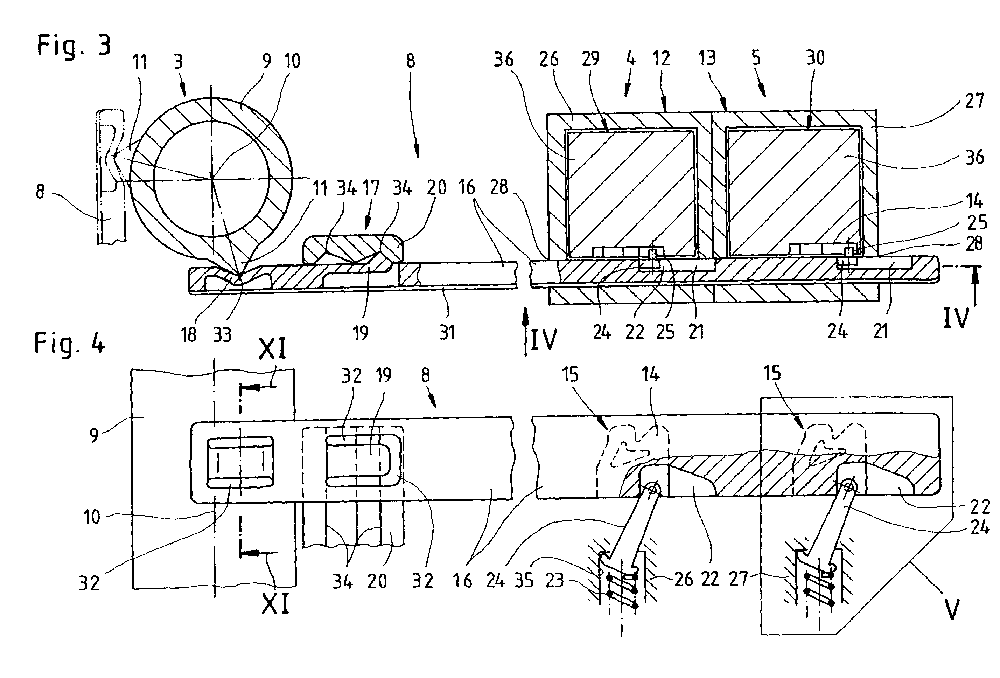

Die Fig. 3 und 4 zeigen das Innere des Gehäuses 2 des Kraftfahrzeug-Lichtschalter 1, wobei von den Schaltern 3, 4 und 5 nur die Rastsysteme dargestellt sind. Der Schalter 3 für Fahrtlicht, Standlicht und Parklicht, der als ein um eine Achse 10 drehbarer Drehschalter 9 ausgebildet ist, befindet sich in der "AUS"-Stellung. Dabei ist die Schieberkulisse 8 nach rechts verschoben und mittels eines federelastischen angespritztem Rasthebels 19 wird die Schieberkulisse 8 an einer am Gehäuse 2 festen Rastaufnahme 20 festgesetzt. Der Schalter 4 für Nebellicht und der Schalter 5 für das Nebelschlußlicht sind jeweils als Drucktastenschalter 12 bzw. 13 ausgebildet. Im Nebellichtschaltergehäuse 26 und im Nebelschlußlichtschaltergehäuse 27 ist je ein Durchbruch 28 vorhanden, durch den die Schieberkulisse 8 hindurchragt und in dem sie geführt wird. Jeder der Drucktastenschalter 12 und 13 besitzt ein Rastsystem 15, das eine an der Drucktaste 29 bzw. 30 oder deren Schaltglieder 36 angeformte Rastkurvenbahn 14 umfaßt, in die ein an dem Gehäuse 26 bzw 27 schwenkbeweglich gehalterter Führungsnocken 25 eingreift. Die die Schalter 9, 12 und 13 verbindende Schieberkulisse 8 umfaßt eine Schubstange 16, die auf ihrer breiten Rückseite zwei über die gesammte Länge vorhandene Gleitnocken 31 aufweist. Mit den Gleitnocken 31 stützt sich die Schubstange 16 in den Durchbrüchen 28 der Gehäuse 26 und 27 ab und bewirkt dadurch eine verringerte Reibung. Am dem dem Drehschalter 9 zugewandten Ende der Schubstange 16 befindet sich eine Rastschaltung 17. Zu dieser Rastschaltung 17 gehörend ist an der Schubstange 16 eine Rastaufnahme 18 und ein Rasthebel 19 angeformt. Damit die Rastaufnahme 18 und der Rasthebel 19 ausreichend federn können, sind in der Schubstange 16 Ausbrüche 32 eingelassen. Der Ausbruch 32 um den Rasthebel 19 ist u-förmig ausgebildet, wodurch der Rasthebel 19 nur an einer Seite an der Schubstange 16 befestigt ist. An der Rastaufnahme 18 sind zwei Ausbrüche 32 angeordnet, so daß die Rastaufnahme 18 an beiden Enden mit der Schubstange 16 verbunden ist, und die Rastvertiefung 33 der Rastaufnahme 18 sehr stark federnd ist. Zur Rastschaltung 17 gehören weiterhin ein am Drehschalter 9 befestigtes, in der Rastvertiefung 33 der Rastaufnahme 18 einliegendes Rastelement 11 und eine am Gehäuse 2 des Kraftfahrzeug-Lichtschalter 1 befestigte Rastaufnahme 20. Die Rastaufnahme 20 besitzt zum Rasthebel 19 zugewandte Rastkerben 34 mit denen die Stellung der Schubstange 16 festgelegt wird. Am anderen Ende der Schubstange 16 weist diese zwei zueinander beabstandete Steuerelemente 21 auf, die jeweils als Aussparung 22 ausgebildet sind.

Zum Rastsystem 15 gehört weiterhin noch pro Drucktastenschalter 12, 13 je ein Führungshebel 24, der am oberen, der Druckfeder 23 gegenüberliegenden Ende den Führungsnocken 25 trägt, welcher in die Rastkurvenbahn 14 hineinragt, die im Zentrum eine Herzkurve 40 besitzt. Die Druckfeder 23 und der Führungshebel 24 sind in einer Schwenkkammer 35 der Gehäuse 26 bzw. 27 eingesetzt. Der den Führungsnocken 25 tragende obere Teil des Führungshebels 24 liegt in der Aussparung 22 der Schubstange 16 ein.

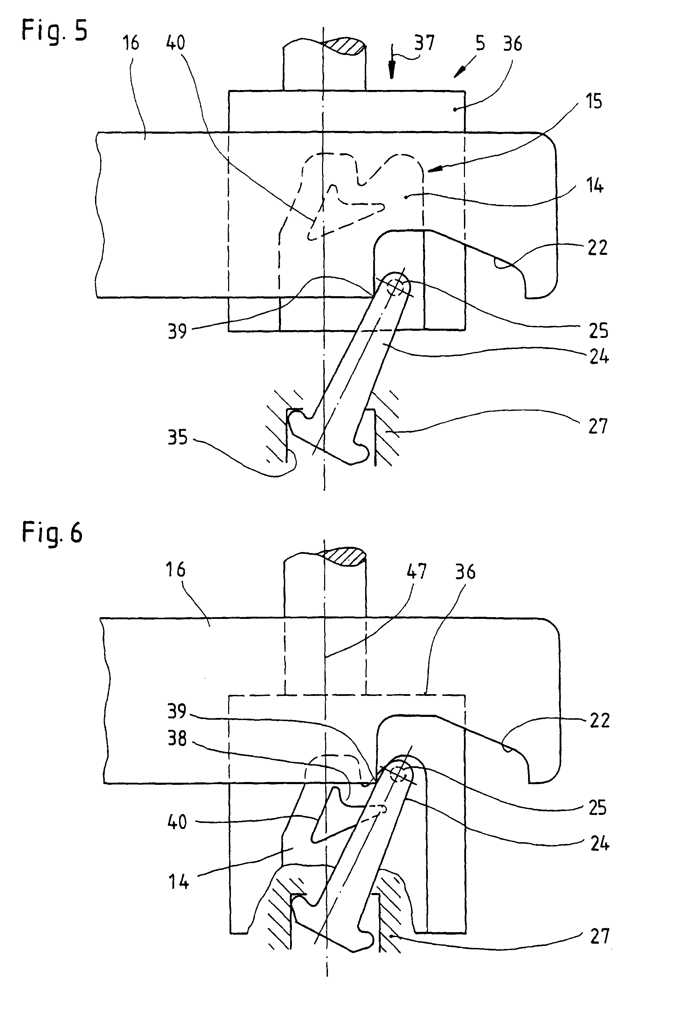

Bei der in der Fig. 3 und 4 gezeigten "AUS"-Stellung des Drehschalters 9 ist die Schubstange 16 nach rechts verschoben worden, wodurch der federelastische Rasthebel 19 in der rechten Rastkerbe 34 der Rastaufnahme 20 eingerastet ist. Durch die Schubstange 16 wurden die Führungshebel 24 gleichfalls nach rechts gedrückt, so daß sich die Führungsnocken 25 des Führungshebels 24 nur im rechten Teil der Rastkurvenbahnen 14 bewegen können, und somit die Drucktastenschalter 12 bzw. 13 niemals in die eingerastete "EIN"-Schaltstellung gelangen können. Beim nach rechts Verschieben der Schubstange 16 kommt eine Kante 39 der Aussparung 22 der Schubstange 16 am Führungshebel 24 zur Anlage und verschwenkt diesen in die gezeigte Stellung entgegen der Wirkung der Feder 23. Dies ist besonders in den Fig. 5 und 6 ersichtlich. Wenn das Schaltglied 36 eines der Schalter 12 bzw 13 entgegen einer nicht dargestellten Schaltgliedfeder in Richtung des Pfeiles 37 gedrückt wird, so nimmt der Führungsnocken 25 innerhalb der Rastkurvenbahn 14 die in der Fig. 6 gezeigte Stellung ein. Um eine verrastete "EIN"-Stellung zu erreichen, müßte der Führungsnocken 25 in die Herzkurvenraste 38 zur Einlage kommen. Dies ist jedoch nicht möglich, da die Kante 39 der Aussparung 22 den Führungshebel 24 in dem gezeigten Winkel hält.

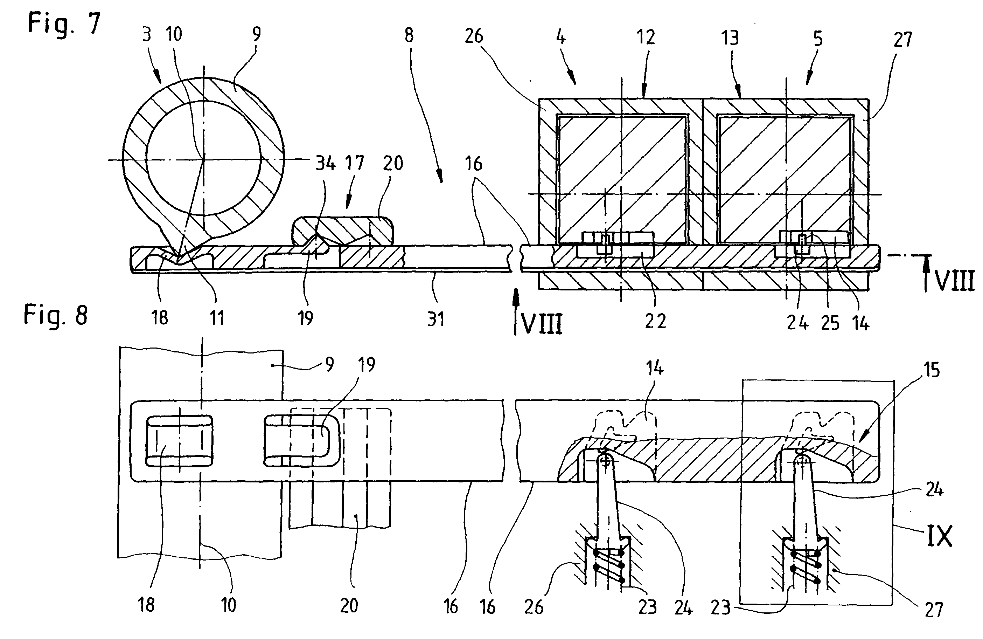

Die Fig. 7 und 8 zeigen den Drehschalter 9 in einer der Licht-"EIN"-Stellungen, jedoch nicht in einer der Parklicht-Stellungen. Der federelastische Rasthebel 19 der Rastschaltung 17 befindet sich in der linken Rastkerbe 34 der Rastaufnahme 20, wobei die Schubstange 16 insgesamt nach links verschoben ist. Hierbei liegt die in der Schubstange 16 eingelassene Aussparung 22 etwa mittig zum Führungshebel 24 der Drucktastenschalter 12, 13. Der Führungsnocken 25 liegt derart unterhalb der in die Rastkurvenbahn 14 hineinragenden Herzkurve 40, daß beim Betätigen des Schaltgliedes 36, das mit dem Betätigungselement des entsprechenden Drucktastenschalters 12 bzw. 13 verbunden ist, in Richtung des Pfeiles 37 der Führungsnocken 25 in Richtung des Umlaufpfeiles 41 an der Herzkurve 40 entlanggleitet. Dabei kippt der Führungshebel 24 entgegen der Wirkung der Druckfeder 23 in der Schwenkkammer 35. Bei vollkommen eingedrücktem Schaltglied 36 kommt der Führungsnocken 25 in einer Seitenausbuchtung 42 zu liegen. Beim Loslassen des Betätigungselementes wird das Schaltglied 36 unter der Wirkung der Schaltgliedfeder entgegen der Richtung des Pfeiles 37 bewegt. Durch die Druckfeder 23 hat der Führungshebel 24 das Bestreben sich gerade aufzurichten, bis er mit seinen beiden Ausrichtnocken 43 am oberen Ende der Schwenkkammer 35 anliegt. Diese Stellung erreicht er jedoch noch nicht, da der Führungsnocken 25 zuvor in der Herzkurvenraststellung 38 unter der Wirkung der Schaltgliedfeder und der Druckfeder 23 zu liegen kommt. Somit ist die normale "EIN"-Stellung der Drucktastenschalter 12, 13 erreicht. Zum Ausschalten der Drucktastenschalter 12, 13 muß das Schaltglied 36 wiederum in Richtung des Pfeiles 37 bewegt werden. Dabei gleitet der Führungsnocken 25 in Richtung des Umlaufpfeiles 41 an der Herzkurve 40 entlang. Beim ganz eingedrückten Betätigungselement liegt der Führungsnocken 25 in der Mittenausbuchtung 45 der Rastkurvenbahn 15 direkt im Bereich der Mittellinie 46. Durch die Wirkung der Schaltgliedfeder wird das Schaltglied 36 mit dem Betätigungselement entgegen der Richtung des Pfeiles 37 gedrückt. Der Führungsnokken 25 kommt an der Herzkurve 40 zur Anlage und folgt in Richtung des Umlaufpfeiles 41 der Kontur der Herzkurve 40. Dabei schwenkt der Führungshebel 24 nach links, bis der Führungsnocken 25 am unteren Ende der Herzkurve 40 angelangt ist. Dort nimmt der Führungshebel 24 wieder seine in der Fig. 8 gezeigte Mittenlage ein.

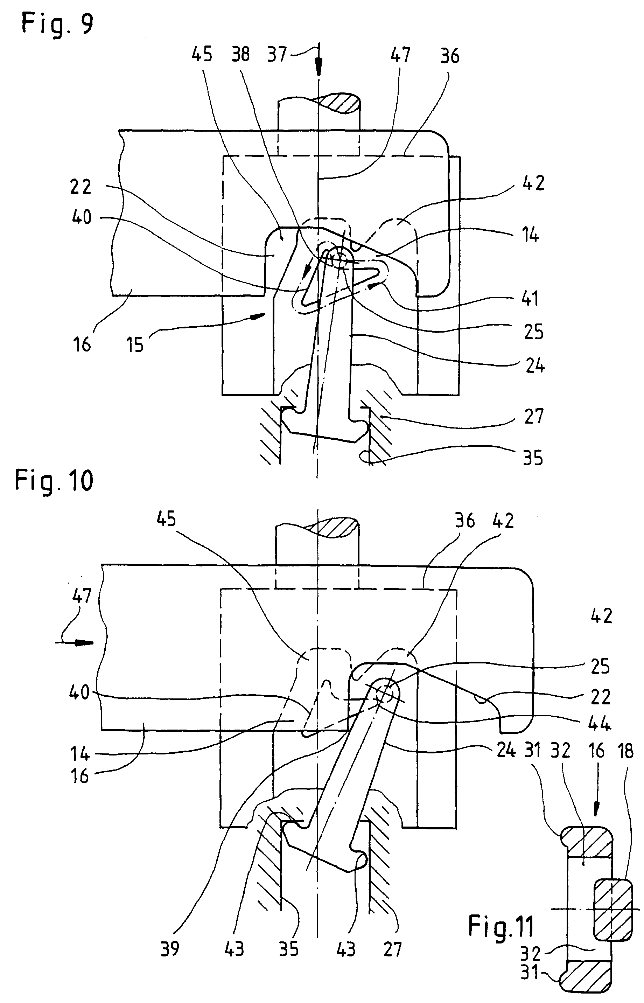

Die Fig. 10 zeigt das Ausschalten der Drucktastenschalter 12, 13 beim Ausschalten des Drehschalters 9. Die Schubstange 16 wird in Richtung des Ausschaltpfeiles 47 bewegt. Sobald die Kante 39 der Schubstange 16 an dem Führungshebel 24 zur Anlage kommt, wird der Führungsnocken 25 nach rechts entgegen der Richtung des Umlaufpfeiles 41 (siehe Fig. 9) entlang der Herzkurve 40 bewegt. Sobald der Führungsnocken 25 über den Herzkurvenradius 44 hinaus bewegt wurde, wird das Schaltglied 36 mit dem Betätigungselement unter der Wirkung der Schaltgliedfeder entgegen der Richtung des Pfeiles 37 bewegt, und die Drucktastenschalter 12, 13 sind durch das Ausschalten des Drehschalters 9 zwangsweise ausgeschaltet worden.

Bei der in der Fig. 3 in Strich-Zweipunkt-Linien gezeigten Anordnung handelt es sich um ein weiteres, am Drehschalter 9 vorhandenes Rastelement 11 und um eine weitere Schieberkulisse 8, die in einem Winkel von 90° zur vorbeschriebenen Anordung angebracht sind. Hierdurch lassen sich weitere Drucktastenschalter vom Drehschalter 9 beeinflußen, wobei der Winkel den Erfordernissen angepaßt werden kann.

## Patentansprüche

1. Kraftfahrzeug-Lichtschalter mit einem Gehäuse (2), in dem ein Schalter (3) für Standlicht sowie Fahrtlicht, ein Schalter (4) für Nebellicht und/oder ein Schalter (5) für Nebelschlußlicht angeordnet sind, **dadurch gekennzeichnet, daß** beim Ausschalten des Fahrtlichtes das Nebellicht und/oder das Nebelschlußlicht zwangsweise mechanisch ausgeschaltet wird.

2. Kraftfahrzeug-Lichtschalter nach Anspruch 1, **dadurch gekennzeichnet, daß** in der Stellung "FAHRTLICHT" des Schalters (3) für Standlicht und Fahrtlicht die Schalter (4,5) für Nebellicht und Nebelschlußlicht frei betätigbar sind.

3. Kraftfahrzeug-Lichtschalter nach Anspruch 1 oder 2, **dadurch gekennzeichnet, daß** in der Stellung "AUS" des Schalters (3) für Standlicht und Fahrtlicht und/oder in der Stellung "STANDLICHT" die Schalter (4,5) für Nebellicht und Nebelschlußlicht nicht einschaltbar sind.

4. Kraftfahrzeug-Lichtschalter nach einem der Ansprüche 1 bis 3, **dadurch gekennzeichnet, daß** der Schalter (3) für Standlicht und Fahrtlicht in diesen beiden Schaltstellungen mit den Schaltern (4,5) für Nebellicht und Nebelschlußlicht mechanisch verbunden ist.

5. Kraftfahrzeug-Lichtschalter nach einem der Ansprüche 1 bis 4, **dadurch gekennzeichnet, daß** zur mechanischen Verbindung des Schalters (3) für Standlicht und Fahrtlicht mit den Schaltern (4,5) für Nebellicht und Nebelschlußlicht eine vom Schalter (3) für Standlicht und Fahrtlicht betätigbare Schieberkulisse (8) vorgesehen ist.

6. Kraftfahrzeug-Lichtschalter nach einem der Ansprüche 1 bis 5, **dadurch gekennzeichnet, daß** der Schalter (3) für Standlicht und Fahrtlicht in dessen "AUS"-Stellung außer Eingriff mit der Schieberkulisse (8) bringbar ist.

7. Kraftfahrzeug-Lichtschalter nach einem der Ansprüche 1 bis 6, **dadurch gekennzeichnet, daß** der Schalter (3) für Standlicht und Fahrtlicht als Drehschalter (9) ausgebildet ist.

8. Kraftfahrzeug-Lichtschalter nach Anspruch 7, **dadurch gekennzeichnet, daß** der Drehschalter (9) umfangsseitig ein Rastelement (11) aufweist.

9. Kraftfahrzeug-Lichtschalter nach einem der Ansprüche 1 bis 6, **dadurch gekennzeichnet, daß** die Schalter (4,5) für Nebellicht und Nebelschlußlicht als Drucktastenschalter (12,13) ausgebildet sind.

10. Kraftfahrzeug-Lichtschalter nach Anspruch 9, **dadurch gekennzeichnet, daß** jedem Drucktastenschalter (12,13) ein Rastkurvenmechanismus (15) zugeordnet ist, wobei der Rastkurvenmechanismus (15) aus einer im Drucktastenschalter (12,13) ausgebildeten Rastkurvenbahn (14) und einem mit dieser zusammenwirkenden gehäuseseitigen und druckfederbelasteten Führungshebel (24) besteht.

11. Kraftfahrzeug-Lichtschalter nach einem der Ansprüche 1 bis 10, **dadurch gekennzeichnet, daß** die Schieberkulisse (8) wenigstens eine Schubstange (16) umfaßt, die einerseits eine Rastschaltung (17) und andererseits zumindest ein Steuerelement (21) für den Rastkurvenmechanismus (15) aufweist.

12. Kraftfahrzeug-Lichtschalter nach Anspruch 11, **dadurch gekennzeichnet, daß** das Steuerelement (21) für den Rastkurvenmechanismus (15) eine Aussparung (22) in der Schubstange (16) ist.

13. Kraftfahrzeug-Lichtschalter nach einem der Ansprüche 1 bis 12, **dadurch gekennzeichnet, daß** der Schalter (4) für Nebellicht und der Schalter (5) für Nebelschlußlicht gleichzeitig von der Schieberkulisse (8) der Schubstange (16) betätigbar sind.

14. Kraftfahrzeug-Lichtschalter nach einem der Ansprüche 1 bis 13, **dadurch gekennzeichnet, daß** der Schalter (4) für Nebellicht und der Schalter (5) für Nebelschlußlicht parallel zueinander angeordnet sind und gleichzeitig jeder dieser Schalter (4,5) von den Schieberkulissen (8) jeweils einer von parallel zueinander verlaufenden Schubstangen (16) betätigbar ist.

15. Kraftfahrzeug-Lichtschalter nach einem der Ansprüche 1 bis 14, **dadurch gekennzeichnet, daß** der Drehschalter (9) für das Standlicht und das Fahrtlicht gleichzeitig für die Innenbeleuchtung des Kraftfahrzeuges vorgesehen ist.

16. Kraftfahrzeug-Lichtschalter nach Anspruch 15, **dadurch gekennzeichnet, daß** der Schalter (3) für Standlicht und Fahrtlicht als Dreh-Zug-Schalter ausgebildet ist.

## Claims

1. Automotive vehicle light switch, having a housing (2) in which are disposed a switch (3) for parking light as well as headlight, a switch (4) for fog light and/or a switch (5) for fog tail light, **characterised in that**, when the headlight is switched-off, the fog light and/or the fog tail light are necessarily switched-off mechanically.

2. Automotive vehicle light switch according to claim 1,
**characterised in that** the switches (4, 5) for fog light and fog tail light are freely actuatable in the "HEADLIGHT" position of the switch (3) for parking light and headlight.

3. Automotive vehicle light switch according to claim 1 or 2, **characterised in that** the switches (4, 5) for fog light and fog tail light cannot be switched-on in the "OFF" position of the switch (3) for parking light and headlight and/or in the "PARKING LIGHT" position.

4. Automotive vehicle light switch according to one of claims 1 to 3, **characterised in that** the switch (3) for parking light and headlight in these two switching positions is mechanically connected to the switches (4, 5) for fog light and fog tail light.

5. Automotive vehicle light switch according to one of claims 1 to 4, **characterised in that** a slide member (8), which is actuatable by the switch (3) for parking light and headlight, is provided for mechanically connecting the switch (3) for parking light and headlight to the switches (4, 5) for fog light and fog tail light.

6. Automotive vehicle light switch according to one of claims 1 to 5, **characterised in that**, in its "OFF" position, the switch (3) for parking light and headlight can be bought out of engagement with the slide member (8).

7. Automotive vehicle light switch according to one of claims 1 to 6, **characterised in that** the switch (3) for parking light and headlight is configured as rotary switch (9).

8. Automotive vehicle light switch according to claim 7,
**characterised in that** the rotary switch (9) has a locking element (11) at the peripheral edge.

9. Automotive vehicle light switch according to one of claims 1 to 6, **characterised in that** the switches (4, 5) for fog light and fog tail light are configured as push-button switches (12, 13).

10. Automotive vehicle light switch according to claim 9, **characterised in that** a locking profile mechanism (15) is associated with each push-button switch (12, 13), the locking profile mechanism (15) comprising a locking profile path (14), which is provided in the push-button switch (12, 13), and a guide lever (24) which co-operates with said path, is integral with the housing and is loaded by a compression spring.

11. Automotive vehicle light switch according to one of claims 1 to 10, **characterised in that** the slide member (8) includes at least one push-rod (16), which has a locking connection (17) at one end and at least one control element (21) for the locking profile mechanism (15) at the other end.

12. Automotive vehicle light switch according to claim 11, **characterised in that** the control element (21) for the locking profile mechanism (15) is a recess (22) in the push-rod (16).

13. Automotive vehicle light switch according to one of claims 1 to 12, **characterised in that** the switch (4) for fog light and the switch (5) for fog tail light are simultaneously actuatable by the slide member (8) of the push-rod (16).

14. Automotive vehicle light switch according to one of claims 1 to 13, **characterised in that** the switch (4) for fog light and the switch (5) for fog tail light are disposed parallel to each other, and each of these switches (4, 5) is simultaneously actuatable by the slide members (8) of one respective push-rod of push-rods (16) which extend parallel to one another.

15. Automotive vehicle light switch according to one of claims 1 to 14, **characterised in that** the rotary switch (9) for the parking light and the headlight is simultaneously provided for the internal illumination of the automotive vehicle.

16. Automotive vehicle light switch according to claim 15, **characterised in that** the switch (3) for parking light and headlight is configured as a turn-and-pull switch.

## Revendications

1. Commutateur de phares pour véhicule automobile comportant un boîtier (2) dans lequel sont disposés un interrupteur (3) pour feux de position et feux de route, un interrupteur (4) pour phares anti-brouillard avant et un interrupteur (5) pour phares anti-brouillard arrière, **caractérisé en ce que** à la coupure des feux de route, les phares anti-brouillard avant et/ou les phares anti-brouillard arrière sont coupés mécaniquement de façon forcée.

2. Commutateur de phares pour véhicules automobiles selon la revendication 1, **caractérisé en ce qu'**en position "FEUX DE ROUTE" de l'interrupteur (3) pour les feux de position et les feux de route, les interrupteurs (4, 5) pour les phares anti-brouillard avant et les phares anti-brouillard arrière peuvent être actionnés librement.

3. Commutateur de phares pour véhicules automobiles selon la revendication 1 ou 2, **caractérisé en ce qu'**en position "ARRET" de l'interrupteur (3) pour feux de position et feux de route et/ou en position "FEUX DE POSITION", les interrupteurs (4, 5) pour les phares anti-brouillard avant et les phares anti-brouillard arrière ne peuvent être mis en marche.

4. Commutateur de phares pour véhicules automobiles selon l'une des revendications 1 à 3, **caractérisé en ce que** l'interrupteur (3) pour les feux de position et les feux de route est relié mécaniquement dans ses deux positions de commutation aux interrupteurs (4, 5) pour les phares anti-brouillard avant et les phares anti-brouillard arrière.

5. Commutateur de phares pour véhicules automobiles selon l'une des revendications 1 à 4, **caractérisé en ce que** pour la liaison mécanique de l'interrupteur (3) pour feux de position et feux de route aux interrupteurs (4, 5) pour phares anti-brouillard avant et phares anti-brouillard arrière, il est prévu une coulisse (8) qui peut être actionnée par l'interrupteur (3) pour feux de position et feux de route.

6. Commutateur de phares pour véhicules automobiles selon l'une des revendications 1 à 5, **caractérisé en ce que** l'interrupteur (3) pour feux de position et feux de route en position "ARRET" peut être désengagé de la coulisse (8).

7. Commutateur de phares pour véhicules automobiles selon l'une des revendications 1 à 6, **caractérisé en ce que** l'interrupteur (3) pour feux de position et feux de route est un interrupteur tournant (9).

8. Commutateur de phares pour véhicules automobiles selon la revendication 7, **caractérisé en ce que** l'interrupteur tournant (9) comporte périphériquement un élément d'encliquetage (11).

9. Commutateur de phares pour véhicules automobiles selon l'une des revendications 1 à 6, **caractérisé en ce que** les interrupteurs (4, 5) pour phares anti-brouillard avant et phares anti-brouillard arrière sont des interrupteurs à bouton-poussoir (12, 13).

10. Commutateur de phares pour véhicules automobiles selon la revendication 9, **caractérisé en ce qu'**à chaque interrupteur à bouton-poussoir (12, 13) est affecté un mécanisme à came d'encliquetage (15), le mécanisme de came d'encliquetage (15) étant constitué d'un chemin à came d'encliquetage (14) formé dans l'interrupteur à bouton-poussoir (12, 13), et d'un levier de guidage (24) côté boîtier soumis à l'action d'un ressort de compression et coopérant avec ce chemin de came d'encliquetage.

11. Commutateur de phares pour véhicules automobiles selon l'une des revendications 1 à 10, **caractérisé en ce que** la coulisse (8) comprend au moins une bielle (16) qui comporte d'une part une commande d'encliquetage (17) et d'autre part au moins un élément de commande (21) pour le mécanisme à came d'encliquetage (15).

12. Commutateur de phares pour véhicules automobiles selon la revendication 11, **caractérisé en ce que** l'élément de commande (21) pour le mécanisme à came d'encliquetage (15) est une découpe (22) pratiquée dans la bielle (16).

13. Commutateur de phares pour véhicules automobiles selon l'une des revendications 1 à 12, **caractérisé en ce que** l'interrupteur (4) pour les phares anti-brouillard avant et l'interrupteur (5) pour les phares anti-brouillard arrière peuvent être actionnés simultanément par la coulisse (8) de la bielle (16).

14. Commutateur de phares pour véhicules automobiles selon l'une des revendications 1 à 13, **caractérisé en ce que** l'interrupteur (4) pour les phares anti-brouillard avant et l'interrupteur (5) pour les phares anti-brouillard arrière sont disposés parallèlement entre eux et en même temps, chacun de ces interrupteurs (4, 5) peut être actionné par les coulisses (8) de l'une des bielles (16) s'étendant parallèlement entre elles.

15. Commutateur de phares pour véhicules automobiles selon l'une des revendications 1 à 14, **caractérisé en ce que** les interrupteurs tournants (9) pour les feux de position et les feux de route sont prévus en même temps pour l'éclairage intérieur du véhicule automobile.

16. Commutateur de phares pour véhicules automobiles selon la revendication 15, **caractérisé en ce que** l'interrupteur (3) pour les feux de position et les feux de route est un interrupteur tournant et à traction.
